# EUROPEAN PATENT APPLICATION

(11) **EP 2 026 231 A1**
(43) Date of publication of application: **18.02.2009**
(21) Application number: 07121828.3
(22) Date of filing: 28.11.2007
(51) Int. Cl.: G06F 21/00

(54) **DRM system and method of managing DRM content**

(30) Priority: 06.08.2007 KR 20070078589
(71) Applicant: HYUNDAI MOTOR COMPANY, Seoul 137-938 (KR)
(72) Inventor: Lim, Ji Hyun 1-408, Taeyoung Apt, 440-050, Gyeonggi-do (KR)
(74) Representative: Viering, Jentschura & Partner

(57) **Abstract**

The present invention relate to a DRM system and a method of managing DRM content, which allow the user of content protected by DRM to use DRM content even through an unconnected device, which is not connected to a network. The DRM system includes a DRM server for issuing a Public Key Infrastructure (PKI)-based certificate and a key pair to an unconnected device via a network client connected to the unconnected device so as to allow the unconnected device to share a right to DRM content with the network client and to authenticate the unconnected device and permit the unconnected device to join a domain on a basis of the certificate and the key pair via the network client.

## Description

### CROSS REFERENCE TO RELATED APPLICATIONS

This application claims priority to Korean Application No. 10-2007-0078589, filed on August 6, 2007, the disclosure of which is incorporated herein by reference.

### BACKGROUND OF THE INVENTION

### 1. Field of the Invention

The present invention relates to Digital Rights Management (DRM). In detail, the present invention relates, in general, to a DRM system and a method of managing DRM content, and, more particularly, to a DRM system and a method of managing DRM content, which allow DRM content, purchased by a DRM content user, to be transmitted to an unconnected device of the user, which is not connected to a network, thus enabling the DRM content to be played using the unconnected device.

The term "unconnected device," as defined in the present invention, means a device that is not connected to a network and is incapable of obtaining a right to DRM content, in particular, a media player. A representative example of such an unconnected device is car audio equipment. An unconnected device is characterized in that it is provided with a wired communication module, such as a Universal Serial Bus (USB) port, and is thus able to exchange data with external devices, but cannot be directly connected to a PC or network through the wired communication module due to the characteristics of the use thereof.

### 2. Description of the Related Art

A demand for the protection of digital content, such as images, music, video, or games, still exists with the development of the wired Internet, and this demand has resulted in the development of Digital Rights Management (DRM) technology. However, due to the characteristics of the wired Internet environment, in which the illegal duplication, modification and transmission of content using a PC can be performed very prevalently but the protection and distribution management of content based on the DRM technology are not highly effective.

However, recently, digital rights management in the mobile communication industry has shown some aspects considerably different from those of the wired Internet. That is, control can be performed so that content used in portable terminals or handset devices is downloaded only through a particular content provision system. Therefore, an increase in the number of downloads of content can immediately result in an increase in profit. Accordingly, the application of DRM technology to guarantee the free distribution of content and the use of content by authorized users has become the focus of interest to mobile communication service providers and content provision servers, and has consequently resulted in the standardization of DRM technology.

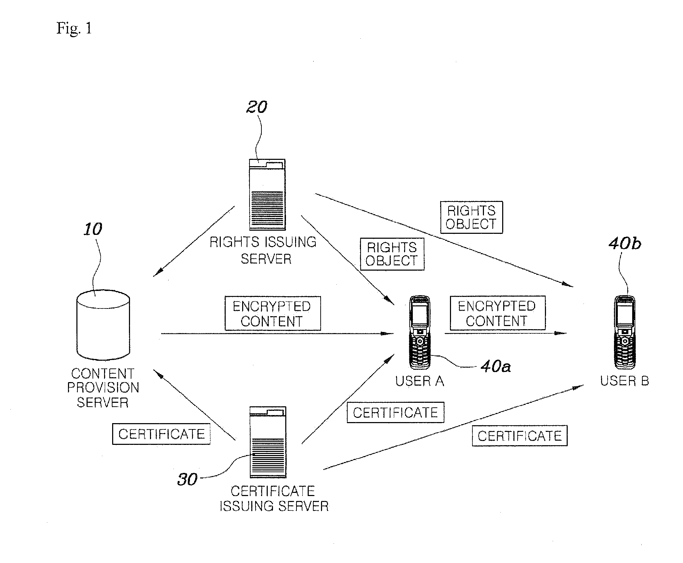

FIG. 1 is a schematic diagram showing the basic concept of a conventional DRM system for protecting content and managing the distribution of the content.

As shown in FIG. 1, a DRM system includes a content provision server 10, a rights issuing server 20, and a certificate issuing server 30.

According to the DRM system, when a user A 40a intends to download content from the content provision server 10 and play the content, the user A 40a must be additionally provided with a certificate issued by the certificate issuing server 30 and a Rights Object (RO) to corresponding content issued by the rights issuing server 20. Meanwhile, content can be transmitted from the user A 40a to a user B 40b. In this case, in order to play received content, the user B 40b must be further assigned a rights object from the rights issuing server 20 to use the received content. According to the DRM technology, content can be freely distributed, but can be used only through a particular device that is authenticated by the DRM system and assigned a rights object for the content to be used.

Such a conventional DRM system is problematic in that a device must be connected to a network through a mobile phone or a PC in order to distribute and use content. In the case of an unconnected device, which cannot be connected to a network, since whether the unconnected device is an authorized device cannot be determined through the authentication of the device, it is currently impossible to play content protected by DRM using the unconnected device. For example, in the case of a vehicle equipped with Telematics, the vehicle can be connected to a network, and thus DRM content can be freely used without limitation. However, in the case of most vehicles, which are not equipped with Telematics, the owners of the vehicles cannot play downloaded content through their car audio equipment even if they are authorized content users.

As the distribution of digital content increases, the necessity to charge for content and utilize DRM technology has been emphasized, and has been propagated to various industries, such as the automobile industry, as well as the IT field. Therefore, association between a service provider, having an extensive infrastructure in music services, and unconnected devices, in particular, various types of media players provided in vehicles having an excellent music playback environment, is required.

Meanwhile, an example of the prior art that can be referred to in relation to the present invention is disclosed in U.S. Patent Publication Nos. 20050216763, 20050268346, and 20050210236, even though they do not present technology for permitting DRM content, purchased online by a consumer, to be used in an unconnected device. These patents propose a scheme for utilizing a portable storage device to facilitate the transfer of rights objects and encrypted content between devices. However, the portable storage device used in the above patents is a storage device, such as a Multimedia Memory Card (MMC) capable of communicating with a device and analyzing a rights object under a powerful security structure, rather than a simple storage device such as a USB memory stick. For this function, a storage device must be equipped with a small-sized microcomputer, and thus the structure of the storage device is complicated and the cost of the storage device is increased. Consequently, costs that must be paid by users to use DRM content are inevitably increased.

The information disclosed in this Background of the Invention section is only for enhancement of understanding of the background of the invention and should not be taken as an acknowledgement or any form of suggestion that this information forms the prior art that is already known to a person skilled in the art.

### SUMMARY OF THE INVENTION

Accordingly, the present invention has been made keeping in mind the above problems occurring in the prior art, and an object of the present invention is to provide a DRM system and a method of managing content, which allow a user having received authorization to consume content protected by DRM to conveniently and inexpensively use DRM content even in an unconnected device, which is not connected to a network.

In order to accomplish the above object, the present invention provides a Digital Rights Management (DRM) system, comprising a DRM server for issuing a Public Key Infrastructure (PKI)-based certificate and a key pair to an unconnected device via a network client connected to the unconnected device and for authenticating the unconnected device and permitting the unconnected device to join a domain on a basis of the certificate and the key pair via the network client.

Since a conventional DRM system is constructed to allow only a particular device, authenticated by the DRM system, to extract a content decoding key from a rights object, DRM service cannot be supported by an unconnected device, incapable of directly receiving a rights object over a network. In contrast, the present invention is constructed such that devices within a specific group can share rights objects, that is, domain rights objects, with each other, thus solving the problem of the conventional DRM system. That is, according to the present invention, an unconnected device joining the same domain as a network client shares a right to DRM content with the network client, and has the same right and responsibility as the network client.

Preferably, the unconnected device may be car audio equipment provided with a storage unit for storing at least the certificate and the key pair, and a communication module, such as a Universal Serial Bus (USB) port or a Bluetooth module for connecting to the network client.

Preferably, the DRM server may comprise a sub-certificate issuing server authorized by a certificate issuing server to issue a certificate instead of the certificate issuing server, the certificate being issued to the unconnected device through the sub-certificate issuing server. In this way, a sub-certificate issuing institution having a trustworthy relationship with a certificate issuing institution for existing DRM systems is separately provided, thus increasing the degree of freedom in the selection and design of the interface between the certificate issuing server for issuing certificates and a handset device. When the unconnected device is car audio equipment, such a sub-certificate issuing server can be managed by a car production company or a car audio equipment production company.

The certificate may be issued to the unconnected device by the sub-certificate issuing server through a Personal Computer (PC) at a stage of manufacturing the unconnected device. Alternatively, the certificate may be issued to the unconnected device by the sub-certificate issuing server through a handset device that supports a wireless network. The authentication and domain joining of the unconnected device may be performed after the unconnected device is connected to the DRM server via a handset device that supports a wireless network.

Meanwhile, after the procedure for authenticating the unconnected device through the DRM server has been completed, the network client and the unconnected device are connected to each other through a USB cable, thus enabling DRM content stored in the network client to be played through the unconnected device. Of course, when a separate storage unit for storing data is provided in the unconnected device, the DRM content stored in the network client may be directly stored in the storage unit of the unconnected device, and may then be played. However, in order to guarantee the free use of DRM content, it is preferable that DRM content be stored in a mobile storage device having a simple storage function, such as a USB memory stick.

As described above, in order to permit DRM content to be stored in the mobile storage device, the network client must be provided with an application program for combining DRM content and a rights object into a single object and transmitting the single object to the unconnected device when the DRM content and the rights object are transmitted to external devices. Moreover, integrity before and after the DRM content and the rights object are combined into the single object must be verified by the unconnected device. For example, when a user intends to transfer both the content and the rights object, stored in the network client, to the USB memory stick, the application program is executed to combine the DRM content with the rights object into a single object by embedding a domain rights object in the mutable DRM information box of a DRM Content Format (DCF), and to embed Hash-Based Message Authentication Code (HMAC) data, required to verify the integrity of the DCF, in which the rights object is embedded, in the mutable DRM information box, together with the domain rights object.

This action is taken to prevent the rights objects, stored in the mobile storage device having no security function, from being extracted and modified or fabricated, and from being unintentionally damaged by the user. Accordingly, the unconnected device can play content only after the integrity of the DCF has been verified.

In addition, the present invention provides a method of managing Digital Rights Management (DRM) content based on the DRM system, comprising a DRM server issuing a Public Key Infrastructure (PKI)-based certificate and a key pair to an unconnected device, and registering the unconnected device in the DRM server and joining the unconnected device to a domain which the network client has joined. Respective steps are performed via the network client after the DRM server and the unconnected device are connected to each other through the network client. After the unconnected device has joined the domain in this way, the transfer of content and a rights object from the network client to the unconnected device can be freely performed using a USB memory stick or the like. The range of use of content in the unconnected device complies with the terms of a domain rights object.

The components and content described in relation to the DRM system will be applied to a method of managing DRM content in the same manner as described above.

### BRIEF DESCRIPTION OF THE DRAWINGS

The above and other features of the present invention will now be described in detail with reference to certain exemplary embodiments thereof illustrated the accompanying drawings, which are given by way of illustration only, and thus are not limitative of the present invention, and wherein:

FIG. 1 is a schematic diagram showing the construction of a conventional DRM system;

FIG. 2 is a schematic diagram showing the construction of a DRM system according to an embodiment of the present invention;

FIG. 3 is a schematic diagram showing a procedure for issuing a certificate according to an embodiment of the present invention;

FIG. 4 is a schematic diagram showing a procedure for joining a domain according to an embodiment of the present invention; and

FIG. 5 is a diagram showing a method of transmitting content and a rights object according to an embodiment of the present invention.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DESCRIPTION OF PREFERRED EMBODIMENTS

Hereinafter, a DRM system and a method of managing DRM content according to embodiments of the present invention will be described in detail with reference to the attached drawings.

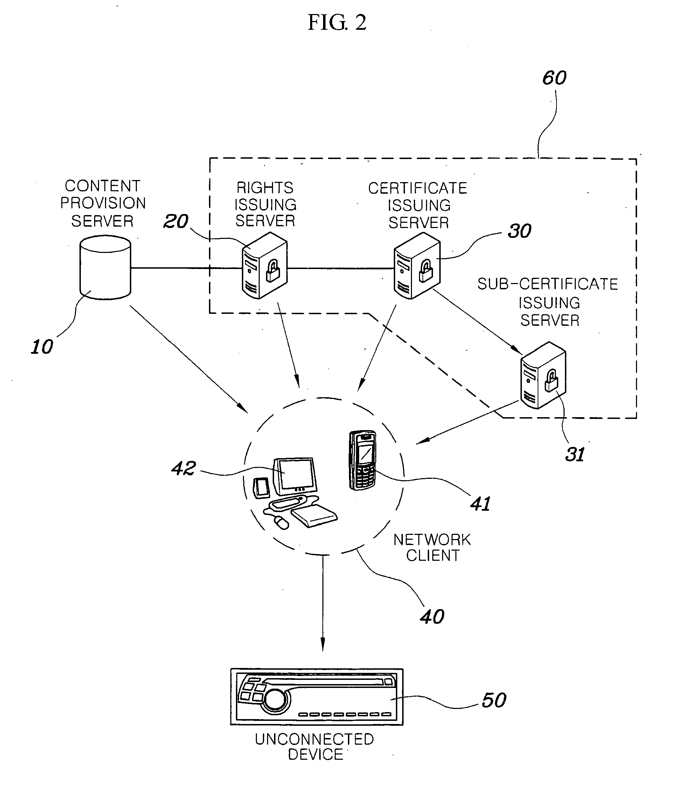

FIG. 2 is a diagram schematically showing the basic construction of a DRM system.

The DRM system includes a content provision server 10, a DRM server 60 having a plurality of servers, and a network client 40. The DRM server 60 performs the function related to the assignment of the right to use content to an unconnected device 50, and includes a rights issuing server 20, a certificate issuing server 30, and a sub-certificate issuing server 31. The unconnected device 50 is connected to the DRM server 60 through the network client 40.

A detailed description of the content provision server 10, the rights issuing server 20, and the certificate issuing server 30 is omitted in the present specification.

The sub-certificate issuing server 31 is a server which is trusted by the certificate issuing server 30 and provides service for issuing a certificate. The unconnected device 50 is issued with a certificate by the sub-certificate issuing server 31. The sub-certificate issuing server 31 can be managed by a car production company.

A representative example of the network client 40 may include a PC 42 and a handset device 41, such as a mobile phone. The unconnected device 50 is provided with a USB module. Through the USB module, the network client 40 is connected to the unconnected device 50. In order for the network client 40 and the unconnected device 50 to freely share content and rights objects with each other, the unconnected device 50 must be issued with a trustworthy certificate, and must join the same domain as the network client 40. This procedure is described in detail below.

### (1) Issuance of certificate

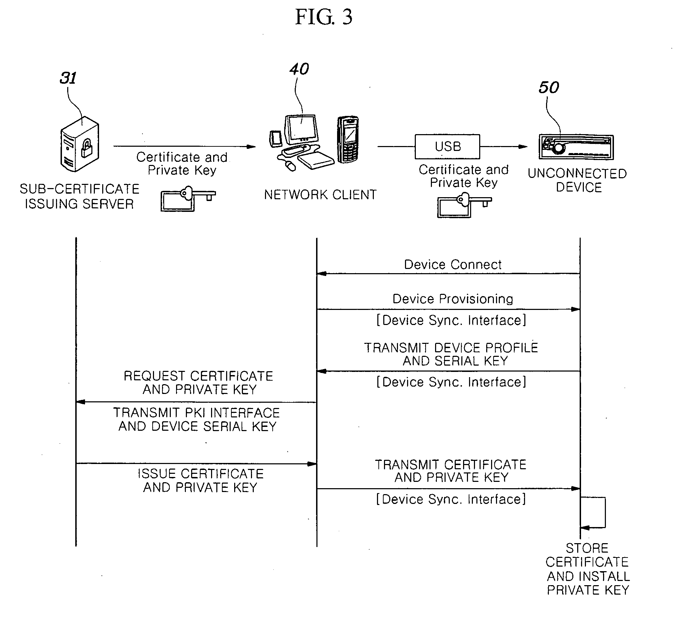

FIG. 3 is a diagram schematically showing a procedure for issuing a certificate.

A certificate is issued by the separate sub-certificate issuing server 31 having a trustworthy relationship with the certificate issuing server 30. The sub-certificate issuing server 31 transmits a certificate, including a key pair(private key and public key) to the unconnected device 50 in order to establish a Public Key Infrastructure (PKI)-based secure relationship. The transmitted certificate is permanently stored in a particular memory region of the unconnected device 50. The issuance of this certificate can be performed using one of the following two methods after the sub-certificate issuing server 31 and the unconnected device 50 are connected to each other through the network client 40.

First, at the stage of manufacturing the unconnected device, especially before the unconnected device comes onto the market, a certificate is issued using the PC 42, instead of the unconnected device, and is imported in the unconnected device.

Second, a certificate is issued using the handset device 41 supporting a mobile network, and is transmitted to the unconnected device.

In the case of the first method, the PC is provided with an application enabling the issuance of a certificate by the sub-certificate issuing server 31, and the interface between the PC and the sub-certificate issuing server 31 complies with PKI standards. Further, the interface between the PC and the unconnected device 50 is required to extract the serial key or the serial number of the unconnected device 50, or to store a secret key or the like in the unconnected device 50.

In the case of the second method, the unconnected device 50, having come onto the market without a certificate having been imported in the unconnected device, is connected to the sub-certificate issuing server 31 through the handset device 41. The items required to issue a certificate are the same as those of the first method.

With reference to FIG. 3, a detailed procedure for issuing a certificate is sequentially described. In the procedure, a description of the fact that communication between devices complies with PKI standards is not repeated.

i . The unconnected device 50 is connected to the network client 40 via USB.

ii . The network client 40 determines the type of unconnected device 50 that is currently connected to the network client 40. Here, the network client 40 and the unconnected device 50 perform object exchange through a USB, and have independent sync protocol standards.

iii . The unconnected device 50 transmits the unique key information thereof, for example, a serial key, to the network client 40. At this time, device profile information, such as a device version and a device type, can be transmitted together with the unique key information.

iv . The network client 40 transmits the unique key information or the like, received from the unconnected device 50, to the sub-certificate issuing server 31, and requests the sub-certificate issuing server 31 to issue a certificate and a key pair for the unconnected device 50.

v . The sub-certificate issuing server 31 creates the certificate and the key pair, and transmits the certificate and the key pair to the network client 40.

vi . The network client 40 transmits the received certificate and key pair to the unconnected device 50.

vii. The unconnected device 50 stores the received certificate and key pair in the secure storage unit thereof.

### (2) Joining domain

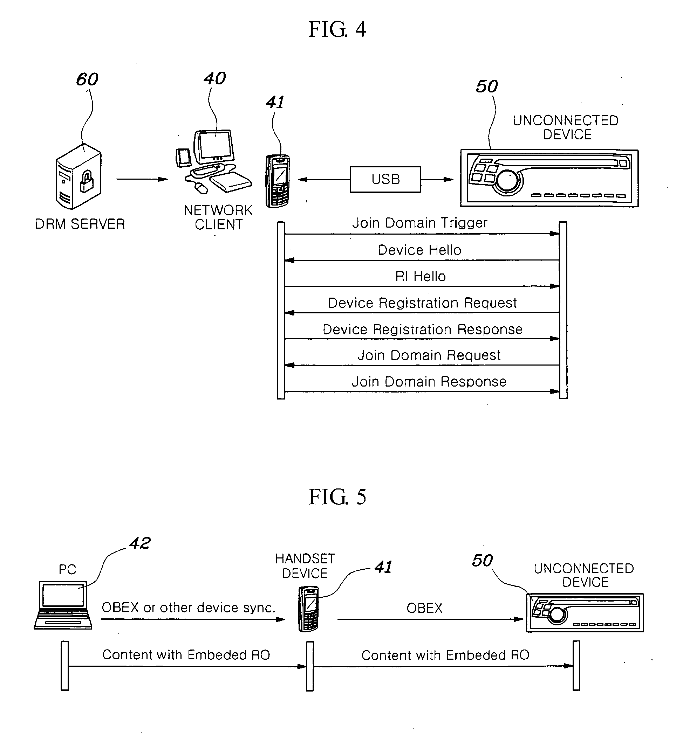

FIG. 4 is a schematic diagram showing a procedure for joining a domain.

In order to provide secure content service through the connection of heterogeneous devices, the authentication of the unconnected device 50, is required by the DRM system, that is, the DRM server 60 of the present invention, in particular, the rights issuing server 20 thereof. This process is performed via the network client 40, authenticated as a device authorized by a DRM service provider, in particular, a handset device. The handset device functions as a proxy for authenticating the unconnected device 50. After the authentication of the unconnected device 50 has been completed through the exchange of certificates, the unconnected device 50 is registered in the domain which the handset device has joined, thus enabling the handset device and the unconnected device 50 to share content and a rights object with each other.

With reference to FIG. 4, a detailed authentication and domain joining procedure is sequentially described.

i . When the unconnected device 50 is connected to the handset device 41, the DRM server 60 issues a trigger for prompting the unconnected device 50 to join the domain through the handset device 41.

ii . The unconnected device 50 is in the state in which a certificate has been issued, but cross certification with the DRM server 60 is not performed yet. Therefore, a "Hello message" for establishing a handshake between the unconnected device 50 and the DRM server 60 is transmitted to the DRM server 60 using the handset device 41 as a proxy.

iii . The DRM server 60 transmits a response to the "Hello message" to the unconnected device 50 through the handset device 41.

iv . After basic information has been exchanged between the devices through the above procedure, the handset device 41 requests the DRM server 60 to authenticate the unconnected device 50.

v . The DRM server 60 configures data about the registration results for the unconnected device 50 in response to the registration request from the unconnected device 50, and transmits the registration result data to the unconnected device 50 through the handset device 41.

vi . When the trustworthy relationship between the DRM server 60 and the unconnected device 50 has been established through the above authentication, a Join Domain Request for joining the unconnected device 50 to the domain which the handset device 41 has previously joined is transmitted to the DRM server 60.

vii. The DRM server 60 configures data about the results of the joining of the unconnected device 50 to the domain, and transmits the joining result data to the unconnected device 50. A domain ID and a domain key, for example, are transmitted to the unconnected device 50.

Meanwhile, in order to determine the status of the trustworthy relationship between the two devices, a protocol for determining the status of the revocation of a certificate (Online Certificate Status Protocol: OCSP or certificate revocation list) can be added. The status of the trustworthy relationship can be verified through a protocol required to update or retrieve a certificate revocation list between the two devices. On the basis of this protocol, the status of the authentication between the devices can be determined.

### (3) Method of transmitting DRM content to unconnected device

FIG. 5 is a diagram showing a method of transmitting content and a rights object.

When a user intends to download content and a rights object from a DRM provider and to use the content and the rights object in an unconnected device 50, as well as a network client, the user can transmit the content and the rights object to an unconnected device 50 using a USB memory stick having a simple storage function. The network client is provided with an application program for combining DRM content and a rights object into a single object. In this case, the content and the rights object are transmitted from the network client to the unconnected device 50, with the content and the rights object combined into a single object, but their integrity before and after they are combined into a single object must be verified. For example, they can be combined into a single object in such a way that a domain rights object is embedded in a DCF. In the DCF in which the rights object is embedded, a Hash-based Message Authentication Code (HMAC) is also embedded, together with the domain rights object, so as to verify the integrity of the DCF.

Meanwhile, the integrity of the DCF is verified by the unconnected device 50, and the unconnected device 50 is constructed to play content only after the integrity thereof has been verified.

As described above, the present invention provides a DRM system and a method of managing DRM content, which allow a DRM content user, having a legal right to the DRM content, to use the DRM content in the unconnected device of the user, which is not connected to a network.

Further, the present invention is advantageous in that only particular devices joining a domain can share content and a rights object with each other, thus meeting the security requirements for content protection.

In addition, the present invention is advantageous in that both content and a rights object can be transmitted to an unconnected device using a mobile storage device having a simple storage function, such as a USB memory stick, thus facilitating the transfer of the content and the rights object, and reducing the costs.

The forgoing descriptions of particular exemplary embodiments of the present invention have been presented for purposes of illustration and description. They are not intended to be exhaustive or to limit the invention to the precise forms disclosed, and obviously many modifications and variations are possible in light of the above teachings. The exemplary embodiment were chosen and described in order to explain certain principles of the invention and their practical application, to thereby enable others skilled in the art to make and utilize various exemplary embodiments of the present invention, as well as various alternatives and modifications thereof. It is intended that technical spirit and scope of the present invention be defined by the Claims appended hereto and their equivalents.

## Claims

1. A Digital Rights Management (DRM) system, comprising a DRM server for issuing a Public Key Infrastructure (PKI)-based certificate and a key pair to an unconnected device via a network client connected to the unconnected device so as to allow the unconnected device to share a right to DRM content with the network client and to authenticate the unconnected device and permit the unconnected device to join a domain on a basis of the certificate and the key pair via the network client.

2. The DRM system according to claim 1, wherein the unconnected device is car audio equipment provided with a storage unit for storing at least the certificate and the key pair, and a communication module, such as a Universal Serial Bus (USB) port or a Bluetooth module for connecting to the network client.

3. The DRM system according to claim 1, wherein the DRM server comprises a sub-certificate issuing server authorized by a certificate issuing server to issue a certificate instead of the certificate issuing server, the certificate being issued to the unconnected device through the sub-certificate issuing server.

4. The DRM system according to claim 3, wherein the sub-certificate issuing server is a separate sub-certificate issuing institution managed by a car production company or a car audio equipment production company.

5. The DRM system according to claim 3, wherein the certificate is issued to the unconnected device by the sub-certificate issuing server through a Personal Computer (PC) at a stage of manufacturing the unconnected device.

6. The DRM system according to claim 3, wherein the certificate is issued to the unconnected device by the sub-certificate issuing server through a handset device that supports a wireless network.

7. The DRM system according to claim 3, ⁷⁶wherein authentication and domain joining of the unconnected device are performed after the unconnected device is connected to the DRM server via a handset device that supports a wireless network.

8. The DRM system according to claim 1, wherein the network client comprises an application for transmitting the DRM content and the rights object to the unconnected device, with the DRM content and the rights object combined into a single object, and wherein integrity before and after the DRM object and the rights object are combined into a single object is verified by the unconnected device.

9. The DRM system according to claim 8, wherein the application is configured to embed the rights object in a DRM Content Format (DCF) and also to embed Hash-based Message Authentication Code (HMAC) data, required to verify integrity of the DCF in which the rights object is embedded, in the DCF together with the rights object.

10. A method of managing Digital Rights Management (DRM) content, comprising:
issuing by a DRM server a Public Key Infrastructure (PKI)-based certificate and a key pair to an unconnected device via a network client after the DRM server is connected to the unconnected device through the network client; and
authenticating by the DRM server the unconnected device and joining the unconnected device to a domain, which the network client has joined, on a basis of the certificate and the key pair issued to the unconnected device, via the network client after the DRM server is connected to the unconnected device through the network client,
wherein the issuance of the certificate to the unconnected device by the DRM server is performed through a separate sub-certificate issuing server having a trustworthy relationship with a certificate issuing server of the DRM server.

11. The method according to claim 10, wherein the certificate is issued to the unconnected device by the sub-certificate issuing server through a Personal Computer (PC) at a stage of manufacturing the unconnected device, or is issued to the unconnected device by the sub-certificate issuing server through a handset device that supports a wireless network.

12. The method according to claim 10, wherein authenticating by the DRM server the unconnected device and joining the unconnected device to the domain is performed after the unconnected device is connected to the DRM server via a handset device that supports a wireless network.
